# EUROPEAN PATENT SPECIFICATION

(11) **EP 1 152 232 B1**
(45) Date of publication and mention of the grant of the patent: **09.06.2004**
(21) Application number: 99902908.5
(22) Date of filing: 15.02.1999
(51) Int. Cl.: G01L 9/06, H01L 29/84, H01L 21/322, G01L 9/00

(54) **SEMICONDUCTOR PRESSURE SENSOR**
HALBLEITER-DRUCKSENSOR
CAPTEUR DE PRESSION SEMI-CONDUCTEUR

(43) Date of publication of application: 07.11.2001
(73) Proprietor: YAMATAKE CORPORATION, Shibuya-ku, Tokyo 105-0002 (JP)
(72) Inventor: YONEDA, Masayuki, Fujisawa-shi, Kanagawa 251-8522 (JP); HONDA, Nobuaki, Fujisawakojo Yamatake Corporation, Fujisawa-shi, Kanagawa 251-8522 (JP); FUKIURA, Takeshi, Fujisawakojo Yamatake Corporat., Fujisawa-shi, Kanagawa 251-8522 (JP); NAGASAKI, Shoji, Fujisawakojo Yamatake Corporation, Fujisawa-shi, Kanagawa 251-8522 (JP)
(74) Representative: Patentanwälte Wenzel & Kalkoff
(86) International application number: PCT/JP1999/000643
(87) International publication number: WO 2000/047969

(56) References cited:
- JP-A- 3 200 335
- JP-A- 3 238 875
- JP-A- 6 216 137
- JP-A- 7 326 622
- BASKETT I: "METHOD FOR SENSOR SUBSTRATE BIAS" MOTOROLA TECHNICAL DEVELOPMENTS, MOTOROLA INC. SCHAUMBURG, ILLINOIS, US, vol. 14, 1 December 1991 (1991-12-01), page 141 XP000276227

## Description

### 1. Technical Field

This invention relates to a semiconductor pressure sensor. More specifically, the present invention is directed to a semiconductor pressure sensor of the type which uses strain gauges formed on a silicon diaphragm.

### 2. Background Art

Conventionally, a semiconductor pressure sensor using strain gauges is known. The pressure sensor forms a pressure-sense diaphragm on a silicon substrate. And, sensor elements (piezo-resistive devices) comprised by diffusion resistor layer are provided on the pressure-sense diaphragm. The variation of a pressure is measured by the detection of the distortion in the diaphragm.

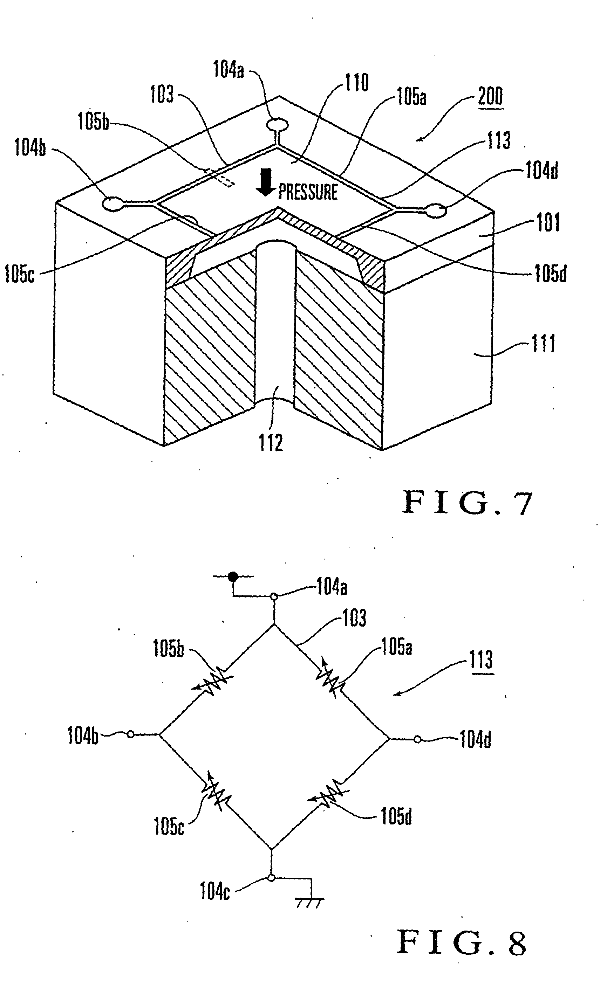

Fig. 7 is a perspective diagram showing a semiconductor pressure sensor using conventional strain gauges. A part of the pressure sensor is shown by the cross section. As shown in Fig. 7, a sensor chip 200 is made by a silicon base 101 which has a diaphragm 110, and sensor elements on the diaphragm 110. The diaphragm 110 provides the whole center section of the silicon base 101 with a thin film, excluding a circumference part. A Wheatstone Bridge circuit 113 is comprised by strain gauges 105a-105d made from diffusion resistors, a metal wiring 103, and terminals 104a-104d.

Fig. 8 is a circuit diagram showing the Wheatstone Bridge circuit 113 based on Fig. 7. As shown in the diagram, the strain gauges 105a-105d made from diffusion resistors are respectively connected by the metal wiring 103. Terminals 104a-104d are provided between each strain gauge. Terminal 104a is connected to a power supply (high potential side). Moreover, terminal 104c is connected to a ground (low potential side). Therefore, a variation of resistance in strain gauges 105a-105d is performed by the deformation of the diaphragm 110 of Fig. 7. The voltage value between terminals 104b and 104d varies. The variation of a pressure is measured by the detection of change in voltage.

In the meantime, the sensor chip 200 is fixed on a pedestal 111, such as Pyrex (TM) glass. And, the sensor chip 200 is sealed in a package together with a silicon sealing liquid. The pedestal 111 provides a through-hole 112 for extracting air. The sensor chip 200 is attached so that the through-hole 112 may be covered. The silicon sealing liquid (not illustrated) is maintained on the diaphragm 110. The sensor elements on the diaphragm 110 (each member which comprises the Wheatstone Bridge circuit 113) are isolated from an external field.
Therefore, the variation of a pressure is transmitted to the sensor elements via the silicon sealing liquid.

I. Baskett, "Method for sensor substrate bias", Motorola Inc. Technical Developments vol. 14, 1991, p. 141, discloses a semiconductor pressure sensor with an N-substrate and a diaphragm, a p+ diffusion area connected to a positive power supply metal run, and a p+ current conductor connected to a negative power supply metal run. In the manufacturing process of the sensor, a bias voltage is applied to the p+ diffusion area in order to produce a junction damage.

### 3. Disclosure of Invention

The pressure sensor as shown above needs a fine pattern process of the silicon substrate for formation of the diaphragm and the diffusion resistors, and is made from the semiconductor manufacturing process which must be considered sufficiently dustproof. However, even though the present clean room provides means for preventing dust, a trace metal-impurity enters into wafer or is generated midway through a process. As a result, the metal-impurity may bring on a fluctuation in a sensor output.

In general, when various semiconductor devices, such as MOSFET or the like are manufactured, a removal in the influence of a device etc. is performed by capturing the metal-impurity during manufacturing process of the wafer. This is called gettering. From the difference of the principle, it is classified into EG (extrinsic gettering) method and IG (intrinsic gettering) method. EG method is the technique which roughens a wafer back-side using a sandblasting method etc. to collect the impurity in the roughened-surf ace. IG method is the technique which makes inside the wafer many micro defects by precipitates of oxygen to capture the impurity in the micro defects.

However, the semiconductor pressure sensor with the structure which provides the strain gauges on the diaphragm etches most silicon-substrate back-sides to form the diaphragm. For this reason, even though gettering is performed in the wafer using conventional EG method and IG method, a getter reduces at the time of a formation of the diaphragm. Therefore, it becomes difficult to capture the impurity sufficiently. Moreover, a new process for making the getter is required. There is also a problem that an effect changes with varieties of the wafer (a bare substrate, SOI (Silicon On Insulator) substrate, epitaxial substrate, etc.).

The object of the present invention is to provide a semiconductor pressure sensor in which fluctuation in a sensor output is reduced.

A semiconductor pressure sensor according to the present invention comprises the features of claim 1.

The PN-junction area may comprise the boundary surface between the silicon base (1) and a diffusion layer (8) provided in the silicon base (1).

The diffusion layer (8) may be locally provided near the strain gauges (5a, 5b, 5c, 5d).

A plural pair of strain gauges (5a, 5b, 5c, 5d) may be provided.

The plural strain gauges (5a, 5b, 5c, 5d) may form Wheatstone Bridge circuits.

The PN-junction area may be provided only in the strain gauge (5c) at the side of the large electrical potential difference with a substrate potential among the terminal (4a) at the side of a high electric potential in the Wheatstone Bridge circuit and the terminal at the side of a low potential (4c).

The diffusion layer (8) may be formed of the combination of the plural long and slender patterns which are an acute angle toward the strain gauges (5a, 5b, 5c, 5d).

### 4. Brief Description of Drawings

Fig. 1 is a top view showing a semiconductor pressure sensor according to Embodiment 1 of the present invention.
Fig. 2A is a sectional view taken along the line A-A' in Fig. 1.
Fig. 2B is a sectional view taken along the line B-B' in Fig. 1.
Fig. 3 is a top view showing Embodiment 2 of the present invention.
Fig. 4 is a top view showing Embodiment 3 of the present invention.
Fig. 5 is a top view showing Embodiment 4 of the present invention.
Figs. 6A, 6B, and 6C are the top views showing Embodiment 5 of the present invention.
Fig. 7 is a perspective diagram showing a conventional semiconductor pressure sensor.
Fig. 8 is a circuit diagram showing a Wheatstone Bridge circuit formed on the diaphragm of Fig. 7.

### 5. Best Mode for Carrying Out the Invention

Hereafter, the preferred embodiments of the present invention will be explained in detail.

The inventors of the present application performed various experiments to develope a semiconductor pressure sensor which does not have a fluctuation in an output. As a result, the inventors found that the fluctuation of a sensor output was brought on by Fe(iron) atom among a number of metal-impurity. That is, it is found that Fe atom in a sensor chip is drawn to PN junctions such as a diffusion resistor resulting in producing a leak current or change in resistance value. If the metal-impurity represented by Fe atom exists in active Si(silicon), it will be the condition that it is easy to narrow a band gap to excite an electron. And furthermore, when movable ions, such as Na(natrium), are interposed under bias application at high temperature, movement of an electron is promoted and it results in the fluctuation.

Therefore, the fluctuation conditions of the sensor output are as follows. (1) Existence of metal-impurity, such as Fe atom. (2) Existence of movable ions, such as Na. (3) Temperature is 125°C or more. (4) Application of a bias potential. The fluctuation occurs when these four conditions are satisfied.

However, Fe atom is hardly included in usual CZ (Czochralski) wafer used. When a device is formed in a wafer, Fe atom is considered to enter in the wafer. In the manufacture apparatus, iron and SUS (stainless alloy) are used in all parts. even a pincette is made from SUS. Therefore, in all processes, Fe atom is considered to adhere to the wafer and to diffuse inside the wafer at various heat process. Of course, although a precision cleaning in a furnace is performed before a heat process of the wafer in general, it is difficult to remove completely. This is similar also to Na atom. There is a possibility that it may enter from all places, such as the human being's skin surface and perspiration. A complete removal is difficult.

Therefore, the inventors developed a semiconductor pressure sensor with the getter for capturing a metal-impurity. considering the above facts.

### [Embodiment 1]

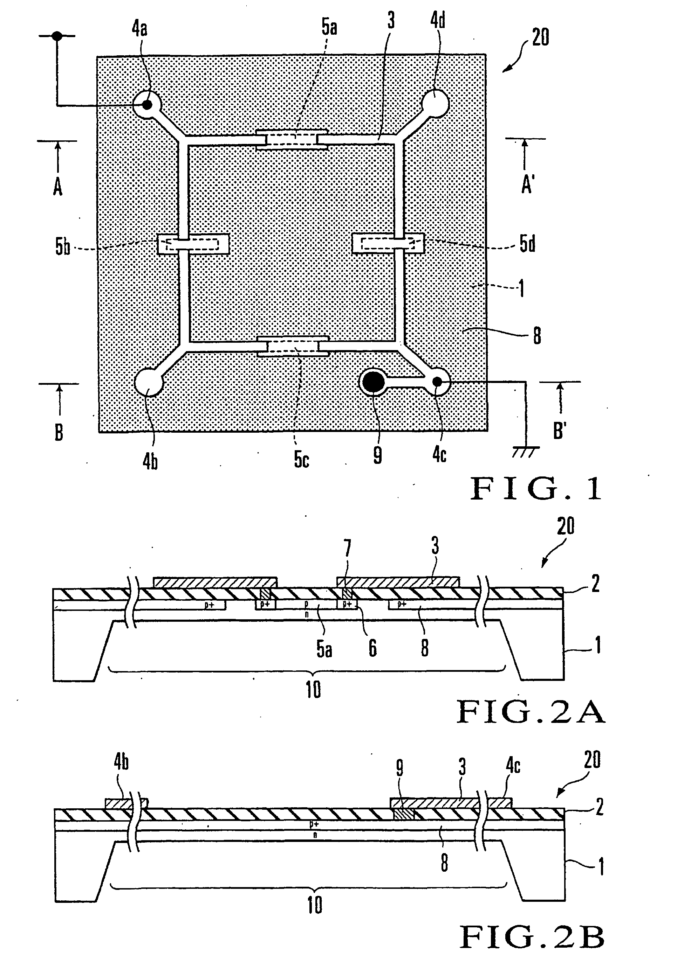

Fig. 1 is a plan showing a semiconductor pressure sensor according to Embodiment 1 of the present invention. As shown in Fig. 1, a sensor chip 20 is made by n type silicon base 1. The whole center section except the circumference part of the silicon base 1 comprises a diaphragm 10 of a thin film. The diaphragm 10 is provided with strain gauges 5a-5d made by p type diffusion resistors, a lead portion 6 formed by the p+ type diffusion resistors, a metal wiring 3, and terminals 4a-4d made from a metal. In this way, a Wheatstone Bridge circuit is formed from the above-mentioned components. When the silicon base 1 is n type substrate, a diffusion resistor is formed by thermal diffusion or ion implantation of a boron or the like.
Fig. 2A is a sectional view along the A-A' line of Fig. 1.
Fig. 2B is a sectional view along the B-B' line of Fig. 1. As shown in Fig. 2A, the main surface of the silicon base 1 is provided with the strain gauge 5a made from p type diffusion layer, the lead portion 6 made from p+ type diffusion layer close to the strain gauge 5a, a getter 8 made from p+ type diffusion layer close to the lead portion 6.

And, the layer-insulation film 2 made from SiO₂ is provided on the main surface of the silicon base 1. The metal wiring 3, the terminal, etc. which comprise one part of such a Wheatstone Bridge circuit, are provided on the layer-insulation film 2. The lead portion 6 is electrically connected with the strain gauge 5a. Furthermore, the lead portion 6 is connected with the metal wiring 3 via the through-hole electrode 7 provided in the layer-insulation film 2. Moreover, as shown in Fig. 2B, the getter 8 is connected with the metal wiring 3 via the through-hole electrode 9 provided in the layer-insulation film 2. And, a reverse bias is applied to the getter 8 via terminal 4c.

Thus, in this embodiment, the getter 8, which has PN reverse bias potential, is provided in vicinity of the strain gauges 5a-5d. Therefore, the metal-impurities in the silicon base 1 (Fe atom, Na atom, etc.) are captured to a PN-junction area. In this way, the variation of the resistivity and the development of the leak current in the strain gauges 5a-5d are prevented.

### [Embodiment 2]

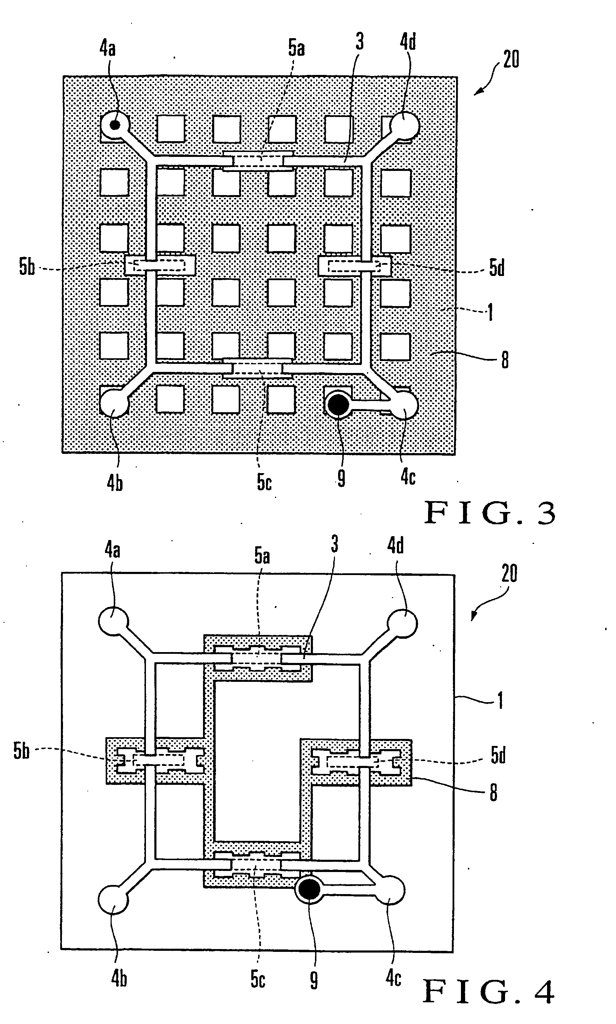

Fig. 3 is a top view showing a semiconductor pressure sensor according to Embodiment 2 of the present invention.The getter 8 is made into the mesh-like layout as shown in the diagram. Therefore, since a contact area of the p+ type getter 8 and the n type silicon substrate 1 increases, namely, a PN-junction area is expanded, a gettering effect improves.

### [Embodiment 3]

Fig. 4 is a top view showing a semiconductor pressure sensor according to Embodiment 3 of the present invention. As shown in the Fig. 4, the getter 8 is locally provided only on the periphery of the strain gauges 5a-5d. Although the getter 8 in Figs. 1 and 3 was provided over the main surface of the silicon substrate 1, a leak current increases with this formation, so that, there is a possibility that the power consumption of the entire chip may increase. Therefore, the getter 8 was locally provided on the periphery of the strain gauges 5a-5d such as in this embodiment. Of course, each getter is electrically connected with terminal 4c via the through-hole electrode 9. Therefore, PN reverse bias is applied to any getter.

In addition, in the Fig. 4, although each getter is connected by using an identical diffusion layer, instead of connecting by the diffusion layer, the metal wiring may be provided on the silicon substrate 1. Moreover, although the layout of the getter 8 is made into the shape of mesh, this invention includes the layout of the getter that is not made into the shape of mesh such as in Embodiment 1.

### [Embodiment 4]

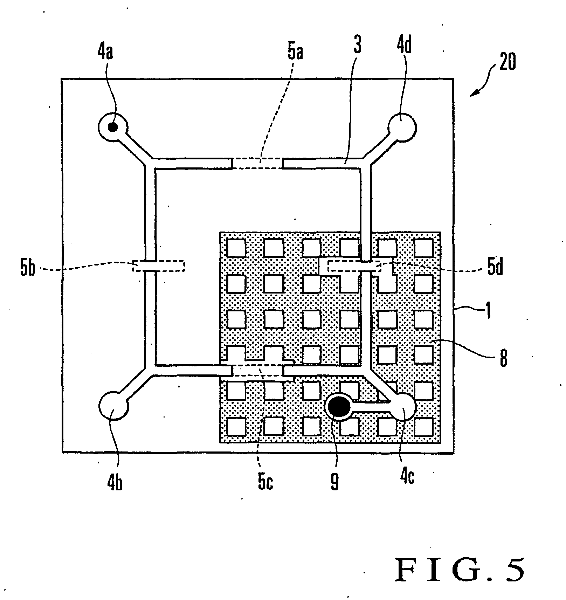

Fig. 5 is a top view showing a semiconductor pressure sensor according to Embodiment 4 of the present invention. As shown in the Fig. 5, the getter 8 is provided only on the periphery of the strain gauges 5c and 5d near a ground side. Metal-impurity, such as iron is positive ions. Therefore, it can be easy to draw to a portion with a large reverse bias to a substrate potential, i.e., sensor element of the ground side. If the getter 8 is provided more than required as the above-mentioned, problems such as the increase of a leak current will be caused. Consequently, the increase of the power consumption of the entire chip can be prevented by providing the getter of necessary minimum in the ground side (low potential side).

In addition, although the layout of the getter 8 is made into the shape of mesh, this invention includes the layout of the getter which is not made into the shape of mesh such as in Embodiment 1.

### [Embodiment 5]

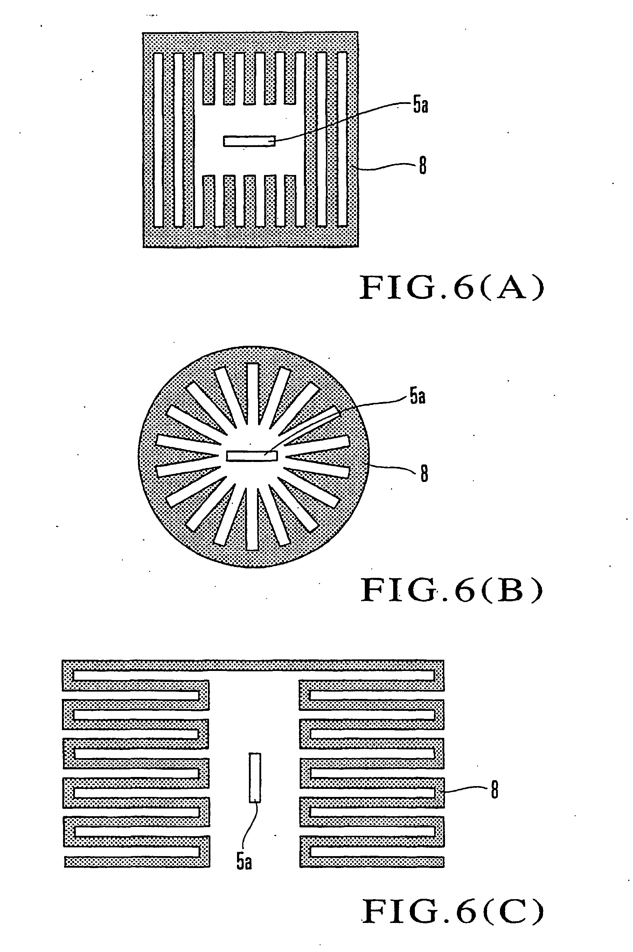

Fig. 6A, 6B, and 6C are top views showing a semiconductor pressure sensor according to Embodiment 5 of the present invention. In the Fig. 6A, 6B, and 6C, a getter has a plurality of the long and slender pattern which is an acute angle toward a strain gauge. It is found that Fe atom can be drawn to the edge of a diffusion resistor, i.e., PN-junction area. Consequently, it is effective if the layout of the getter 8 is performed so that PN-junction area can be taken larger to the strain gauge as shown in the Fig. 6A, 6B, and 6C.

As explained in the five embodiments, the present invention can capture the metal-impurity in a silicon substrate to prevent a leak current from generating by the work of the PN-junction area provided in the diaphragm.

## Claims

1. A semiconductor pressure sensor comprising:
a Silicon substrate (1) with a diaphragm (10) which produces a distortion depending on a pressure;
strain gauges (5a, 5b, 5c, 5d) which are provided on the diaphragm (10) and are formed by diffusion resistors; **characterized by**
a PN-junction area which is provided adjacent to the strain gauges (5a, 5b, 5c, 5d) and means for applying in use a reverse bias to said PN-junction.

2. A semiconductor pressure sensor claimed according to Claim 1, wherein
the PN-junction area comprises the boundary surface between the silicon substrate (1) and a diffusion layer (8) provided in the silicon substrate (1).

3. A semiconductor pressure sensor according to Claim 2, wherein
the diffusion layer (8) is locally provided near the strain gauges (5a, 5b, 5c, 5d).

4. A semiconductor pressure sensor according to Claim 1, wherein
a plurality of strain gauges(5a, 5b, 5c, 5d)are provided.

5. A semiconductor pressure sensor according to Claim 4, wherein
a plurality of strain gauges(5a, 5b, 5c, 5d) form a Wheatstone Bridge circuit.

6. A semiconductor pressure sensor according to.Claim 5, wherein
the PN-junction area is provided only in the strain gauge (5c) at the side of the large electrical potential difference with a substrate potential among a terminal (4a) at the side of a high electric potential in the Wheatstone Bridge circuit and the terminal at the side of a low potential (4c).

7. A semiconductor pressure sensor according to Claim 2, wherein
the diffusion layer (8) is formed of the combination of the multiple long and slender patterns which is an acute angle toward the strain gauges(5a, 5b, 5c, 5d).

## Patentansprüche

1. Ein Halbleiter-Drucksensor, umfassend:
ein Silikonsubstrat (1) mit einem Diaphragma (10), das abhängig vom Druck eine Verzerrung erzeugt;
Spannungsmeßelemente (5a, 5b, 5c, 5d), die auf dem Diaphragma (10) vorgesehen und durch Diffusionswiderstände gebildet sind; **gekennzeichnet durch**
einen PN-Übergangsbereich, der den Spannungsmeßelementen (5a, 5b, 5c, 5d) benachbart vorgesehen ist, und Mittel zum Anlegen einer umgekehrten Vorspannung an den PN-Übergangsbereich bei Verwendung.

2. Ein Halbleiter-Drucksensor nach Anspruch 1 beansprucht, worin
der PN-Übergangsbereich die Grenzfläche zwischen dem Silikonsubstrat (1) und einer Diffusionsschicht (8), die im Silikonsubstrat (1) vorgesehen ist, umfaßt.

3. Ein Halbleiter-Drucksensor nach Anspruch 2, worin
die Diffusionsschicht (8) nahe den Spannungsmeßelementen (5a, 5b, 5c, 5d) lokal vorgesehen ist.

4. Ein Halbleiter-Drucksensor nach Anspruch 1, worin
eine Mehrzahl Spannungsmeßelemente (5a, 5b, 5c, 5d) vorgesehen ist.

5. Ein Halbleiter-Drucksensor nach Anspruch 4, worin
eine Mehrzahl Spannungsmeßelemente (5a, 5b, 5c, 5d) eine Wheatstone'sche Brückenschaltung bilden.

6. Ein Halbleiter-Drucksensor nach Anspruch 5, worin
der PN-Übergangsbereich nur im Spannungsmeßelement (5c) an der Seite der großen elektrischen Potentialdifferenz mit einem Substratpotential zwischen einem Anschluß (4a) an der Seite eines hohen elektrischen Potentials in der Wheatstone'schen Brückenschaltung und dem Anschluß an der Seite eines niedrigen Potentials (4c) vorgesehen ist.

7. Ein Halbleiter-Drucksensor nach Anspruch 2, worin
die Diffusionsschicht (8) aus der Kombination der mehreren langen und schlanken Muster gebildet ist, die ein spitzer Winkel auf die Spannungsmeßelemente (5a, 5b, 5c, 5d) sind.

## Revendications

1. Capteur de pression à semi-conducteur, comprenant :
un substrat (1) de silicium possédant un diaphragme (10) qui produit une distorsion dépendant d'une pression, et
des jauges dynamométriques (5a, 5b, 5c, 5d) qui sont placées sur le diaphragme (10) et sont formées par des résistances obtenues par diffusion, **caractérisé par**
une région de jonction PN qui est disposée afin qui elle soit adjacente aux jauges dynamométriques (5a, 5b, 5c, 5d) et un dispositif d'application, pendant l'utilisation, d'une polarisation en inverse à la jonction PN.

2. Capteur de pression à semi-conducteur selon la revendication 1, dans lequel
la région de jonction PN comprend la surface formant la limite entre le substrat (1) de silicium et une couche de diffusion (8) disposée dans le substrat (1) de silicium.

3. Capteur de pression à semi-conducteur selon la revendication 2, dans lequel
la couche de diffusion (8) est disposée localement près des jauges dynamométriques (5a, 5b, 5c, 5d).

4. Capteur de pression à semi-conducteur selon la revendication 1, dans lequel
plusieurs jauges dynamométriques (5a, 5b, 5c, 5d) sont présentes.

5. Capteur de pression à semi-conducteur selon la revendication 4, dans lequel
plusieurs jauges dynamométriques (5a, 5b, 5c, 5d) forment un circuit en pont de Wheatstone.

6. Capteur de pression à semi-conducteur selon la revendication 5, dans lequel
la région de jonction PN est disposée uniquement dans la jauge dynamométrique (5c) du côté de la grande différence de potentiel électrique avec un potentiel du substrat choisi parmi une borne (4a) du côté d'un potentiel électrique élevé dans le circuit à pont de Wheatstone et la borne du côté d'un faible potentiel (4c).

7. Capteur de pression à semi-conducteur selon la revendication 2, dans lequel
la couche de diffusion (8) est formée de la combinaison de plusieurs motifs longs et effilés, formant un angle aigu vers les jauges dynamométriques (5a, 5b, 5c, 5d).
